(19) Europäisches Patentamt
European Patent Office
Office européen des brevets

(11) Publication number: **0 149 601**
**B1**

# (12) EUROPEAN PATENT SPECIFICATION

(45) Date of publication of patent specification: **04.07.90**

(51) Int. Cl.[5]: **C 08 K 5/20,** C 08 K 3/34, B 29 D 7/00, C 08 L 23/08

(21) Application number: **83902557.4**

(22) Date of filing: **15.07.83**

(86) International application number: **PCT/US83/01079**

(87) International publication number: **WO 85/00613 14.02.85 Gazette 85/04**

## (54) SLIP AND BLOCK ADDITIVES FOR OLEFIN POLYMERS.

(43) Date of publication of application: **31.07.85 Bulletin 85/31**

(45) Publication of the grant of the patent: **04.07.90 Bulletin 90/27**

(84) Designated Contracting States: **AT BE CH DE FR GB LI NL SE**

(56) References cited:
**CA-A- 736 008**
**GB-A-1 034 337**
**GB-A-2 031 910**
**JP-A-47 039 238**
**US-A-2 991 265**
**US-A-3 104 232**
**US-A-3 160 598**
**US-A-3 170 889**
**US-A-3 197 425**
**US-A-3 330 796**
**US-A-3 463 751**
**US-A-3 470 122**
**US-A-3 595 827**
**US-A-3 658 980**
**US-A-3 809 671**
**US-A-4 327 009**
**US-A-4 394 474**

(73) Proprietor: **THE DOW CHEMICAL COMPANY**
**2030 Dow Center Abbott Road P.O. Box 1967**
**Midland Michigan 48640-1967 (US)**

(72) Inventor: **McKINNEY, Osborne, Kelly**
**130 Oleander**
**Lake Jackson, TX 77566 (US)**
Inventor: **FLORES, David, Perez**
**1020 Oleander**
**Lake Jackson, TX 77566 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 149 601 B1**

## Description

### Background of the invention

There are various high molecular weight olefin polymers and copolymers which are suitable in making extrusion-cast films for commercial purposes. Such extrusion-cast films are generally made by extrusion of the molten polymer through a slot-die onto revolving chilled rolls; the general technique is often referred to as "chill roll extrusion", "cast film extrusion", or "slot-die extrusion".

There are, basically, two types of olefin polymerization techniques for preparing high molecular weight olefin polymers and copolymers. The oldest commercial technique involves high pressure, high temperature, and the use of a free radical initiator, such as a peroxide; these type polymers are generally known as low density polyethylene (LDPE) and are also known as ICI-type polyethylenes. These LDPE polymers contain branched chains of polymerized monomer units pendant from the main polymer "backbone" and generally have densities in the range of about 0.910—0.935 g/cm$^3$.

The other commercially-used technique involves coordination catalysts of the "Ziegler" type or "Phillips" type and includes variations of the Ziegler type, such as the Natta type. These catalysts may be used at very high pressures, but are generally used at very low or intermediate pressures. The products made by these coordination catalysts are generally known as "linear" polymers because of the substantial absence of branched chains of polymerized monomer units pendant from the main polymer "backbone", and they are also generally known as high density polyethylene (HDPE). It is these "linear" polymers to which the present invention pertains. Linear polyethylene (HDPE) ordinarily has a density in the range of 0.941 to 0.965 g/cm$^3$.

The present invention pertains to "linear" type ethylene polymers wherein ethylene has been polymerized along with minor amounts of alpha, beta-ethylenically unsaturated alkenes having from 3 to 12 carbons per alkene molecule, preferably 4 to 8. The amount of the alkene comonomer is generally sufficient to cause the density of the polymer to be substantially in the same density range as LDPE, due to the alkyl side chains on the polymer molecule, yet the polymer remains in the "linear" classification; they are conveniently referred to as "linear low density polyethylene" (LLDPE). These polymers retain much of the strength, crystallinity, and toughness normally found in HDPE homopolymers of ethylene, but the higher alkene comonomers impart high "block" characteristics to extrusion-cast films and the high "slip" (i.e. low coefficient of friction) characteristic inherently found in HDPE is diminished.

Slip and antiblock agents are often added to LDPE film compounds to insure proper film handling characteristics. "Slip", basically defined as the coefficient of sliding friction, may be adjusted by incorporating certain additives, e.g., fatty acid amides. "Blocking", the tendency of film to stick to itself, can be reduced by adding finely divided inorganic fillers such as silica. HDPE homopolymers with densities of above about 0.940 g/cm$^3$ generally show good slip properties (that is, they slide across each other with ease), and slip agents are not normally required.

Closely related art is found, e.g., in U.S. 2,991,265; U.S. 3,324,060; U.S. 3,463,751; U.S. 3,470,122; U.S. 3,595,827; and U.S. 3,362,839.

Other art, believed to be of less relevency is found, e.g., in U.S. 3,658,980; U.S. 2,879,244; U.S. 3,070,462; U.S. 3,121,914; U.S. 3,387,073; and U.S. 3,499,950.

### Summary of the invention

Extrusion-cast films of certain high molecular weight, linear low density ethylene copolymers which inherently have high block and low slip characteristics are compounded with a secondary fatty acid amide and a finely divided naturally-occurring inorganic powder, such as silica, before being extrusion-cast as a thin film. The additives serve to substantially reduce the block and increase the slip characteristics of the film.

### Detailed description of the invention

The high molecular weight, linear low density ethylene copolymers within the purview of the present invention are those made under conditions which are conducive to preparation of linear polymers such as by the well-known Ziegler or Phillips processes. The instant ethylene polymers contain minor amounts (generally about 5% to about 20% by weight) of at least one alpha-olefin comonomer selected from the group consisting of propylene, 1-butene, 1-isobutene, 1-pentene, 1-isopentene, 1-hexene, 1-isohexene, 1-heptene, 1-isoheptene, 1-octene, 1-isooctene, 1-nonene, 1-isononene, 1-decene, 1-isodecene, and the like. The amount of comonomers used is enough to result in polymer densities in the low range of about 0.90—0.94 g/cm$^3$. The instant copolymers are also characterized as being high molecular weight, having a melt index (melt flow) in the range of about 0.1 g/10 min. as measured by ASTM-D-1238 condition (E) to about 20 g./10 min. as measured by ASTM-D-1238 condition (D), and as having, inherently, high block and low slip characteristics. Such polymers are ideally suited for use where high or moderate strength, extrusion-cast films are used as packaging materials, but the high block is detrimental when the film is manufactured in the customary manner involving large rolls, especially when rolled at very warm conditions. During shipping and/or storage, the high block polymers tend to adhere layer-to-layer with such a strong adhesion force that unrolling the film often causes distortion, and even tearing, of the film especially if the film is very thin. It appears that when enough of the higher alkene comonomers are used in

the linear ethylene copolymer to result in a relatively low density polymer (i.e., about 0.90 to about 0.94 g/$cm^3$), the pendant alkyl groups provide surface phenomena or surface properties which result in high block and low slip. The nature of this phenomenon is not fully understood. The phenomenon is observed even on cast films of the subject polymers when employed as a "core" layer between two very thin outer layers of ordinary LDPE.

The term "block" is used here to describe the adhesion of two layers of the film to each other by the application of even slight compression and where pulling apart of the layers is likely to create even small changes in the film and/or handling problems. Such "blocking" is also somewhat dependent on, or responsive to, the amount of compression applied as well as to the duration of the compression and to the temperature. "Destructive block" refers to tendencies to form substantially irreversible adhesion where peeling apart is likely to cause deformation or tearing of the film; such "destructive block" can occur even when compression forces are small, such as when rolls of the film are made during manufacture, especially when the rolls are prepared, stored, or shipped under very warm or hot conditions.

It is an object of the present invention to substantially reduce the blocking characteristics in the above-described polymers, thereby improving the handling characteristics of cast-extruded films prepared from the polymers.

It is a further object to increase the slip, i.e., to decrease the coefficient of friction of films cast-extruded from the polymers.

These and other objects are substantially attained by incorporating into the above-described polymers certain additives, as described below, prior to extrusion-casting the thin film product.

The compositions of the present invention comprise the LLDPE containing about 0.05 to about 1.5 weight percent, preferably about 0.1 to about 0.5 weight percent, of the secondary fatty acid amide along with about 0.02 to about 2.0 weight percent, preferably about 0.15 to about 0.6 weight percent, of the finely-divided naturally-occurring inorganic. The additives are more fully identified hereinafter. By using both additives, better results are obtained in both block and slip improvement than when each is employed independently, in different samples, for either or both of these purposes. In other words, the inorganic appears to amplify or improve the ability of the amide additive to lower the coefficient of friction and the amide appears to amplify or improve the ability of the inorganic to reduce the block. The compositions may be prepared by mixing a concentrated masterbatch with virgin polymer such as described hereinafter.

The secondary fatty acid amides useful in the present invention conform to the empirical formula

$$R-\overset{\overset{\displaystyle O}{\|}}{C}-\overset{\overset{\displaystyle H}{|}}{N}-R'$$

where R and R', independently, represent alkyl groups having 10 to 26 carbon atoms, both of which may be saturated or unsaturated alkyls, or one of which may contain olefinic unsaturation. These secondary acid amides are polar compounds which are both hydrophilic and lyophilic; in other words they are "amphipathic".

Compounds which conform to the above empirical structure are, e.g., oleyl palmitamide, stearyl eucylamide, stearyl stearamide, erucyl erucylamide and oleyl erucylamide. Other compounds which conform to the structure are, e.g., those wherein R and/or R' represent the following groups:

| | |
|---|---|
| erucyl | behenyl |
| linoleyl | arachidyl |
| linolenyl | stearyl |
| arachidonyl | palmityl |
| palmitoleyl | lignoceryl |
| elaidyl | oleyl |
| vaccenyl | |

The naturally-occurring inorganic minerals are, e.g., clay, diatomaceous silica, talc, and limestone, with the siliceous mineral being preferred. The inorganic should have an average particle size in the range of about 0.02 to about 40 microns (μm), a surface area of about 0.7 to about 100 $m^2/g$, and an oil absorption value of about 21 to about 175 parts of oil per 100 parts inorganic.

A masterbatch of the LLDPE with high loadings of the secondary amide and the naturally-occurring inorganic mineral may be blended or "let-down" with additional quantities of polyethylene to achieve the desired loading in films fabricated from the blend. For instance, about 100 parts of a masterbatch of LLDPE, containing about 4% of the secondary amide and about 1.5% of the mineral, may be blended with additional polymer to give a total blend of about 2000 parts containing about 2000 ppm amide and about 750 ppm mineral. This masterbatch technique is used with LLDPE.

Films of LLDPE prepared in the practice of this invention contain from about 96.5 to about 99.93 weight percent of polymerized olefins and from about 0.07 to about 3.5 weight percent of the mixture of additives. While effective amounts and preferred concentrations of the additives vary somewhat with the density of the LLDPE, the amount of block-reduction and slip desired, and the smoothness of the film surface,

generally preferred concentrations of the mixture of additives for the purposes of the invention range from about 0.25 to about 1.1 weight percent. As a rule the smooth surface films require more additives for a given amount of block-reduction than do the rough surface films, e.g., an embossed film. For example, whereas a particular smooth surface linear LDPE film may require as much as about 1.0 to 1.5 weight percent of the amide to give a certain block-reduction, only about, say, 0.05—0.09 weight percent of the same amide may be sufficient to give the same block-reduction in an embossed film.

The films according to this invention are readily prepared by (1) intimately admixing the olefin copolymer with the additives and (2) extruding the resulting mixture in the form of a clear, flexible sheet which is subsequently cooled in a draw-down procedure to form a film having an average thickness in the range of about 7,62 µm (0.3 mil) to about 203,2 µm (8.0 mils). The thin sheet is extruded and drawn onto a chill roll. Somewhat different results are usually obtained in films made by the well-known blown-bubble technique, however the present additives are also useful in such blown films. The linear low density ethylene polymers may also be co-extruded with ordinary ethylene polymers so that the ordinary polymers form very thin outer, adhered layers on one or both sides of the linear low density polymers.

Mixing of the required components is readily carried out in a conventional mixing apparatus such as a Banbury mixer or screw type extruder. In one embodiment wherein the mixing device is a screw type extruder, the additives are fed into the barrel of the extruder. The extruded mixture may be mixed with additional polymer(s) prior to final extrusion or may be fed directly into an extruder equipped with a sheet die and extruded in the form of a transparent flexible sheet. In one extrusion operation the transparent sheet is extruded onto a chill roll and is drawn down to form a film having the desired thickness, usually between about 7,62 µm (0.3 mil) to about 203,2 µm (8.0 mils). Suitable extrusion apparatus include a typical screw type extruder, an extruder equipped with a ramming device and the like.

In a preferred embodiment the mixing and extruding steps are carried out in a single apparatus which is a typical screw type extruder that is equipped with a sheet die and feed means placed along the extruder barrel which houses the screw or screws of the extruder. The block-reducing additive and the slip-improving additive are introduced as the polymer is being extruded at a rate such that a constant mixture is maintained. Similarly, concentrated masterbatches can be added to virgin material in the screw-type extruder.

The effect of various additives on slip and block characteristics of the polymer are tested by incorporating the additives into the polymer and extrusion-casting the mixture into film.

In the absence of any available or suitable ASTM test for measuring the block properties in the present invention, the following tests were devised:

A balanced beam is provided with an empty water-reservoir dangling from one end and a 9,525 µm by 9,525 µm by 2,54 µm block (about 90,3 $cm^2$ face) (3.75" by 3.75" by 1" block (about 14 $in.^2$ face)) dangling from the other end. Immediately below the said 90,3 $cm^2$ (14 $in.^2$) block is a similar 90,3 $cm^2$ (14 $in.^2$) block, the two 90,3 $cm^2$ (14 $in.^2$) flat surfaces barely touching together when no weight is applied to either end of the balanced beam. The lower block is fixed and does not move. The balanced beam rests on a blade-edge fulcrum and is very sensitive to small weights. Two film specimens, each measuring about 15,24 (6") by 15,24 (6") are brought together so that a complete side (face) of one specimen is totally against a complete side (face) of the other. The so-formed 2-ply specimen of 15,24 (6") by 15,24 (6") dimension is centered between the two 90,3 $cm^2$ (14 $in.^2$) blocks (while the beam is restrained from moving) with the two blocks touching the upper and lower surfaces of the 2-ply specimen. The protruding edges of the 2-ply specimen are separated from each other by hand, the freed edges of the upper ply being affixed in some manner (e.g., rubber band or an adhesive) to the outer edges of the upper block and the freed edges of the lower ply being affixed to the outer edges of the lower block, leaving the 90,3 $cm^2$ (14 $in.^2$) portion of the 2-ply specimen still clinging, ply-to-ply, between the blocks. When the specimen is ready for testing, the restraint on the beam is removed and water is rapidly dripped into the reservoir on the other end of the beam. For consistency from test to test, the rate of water dripping is substantially consistently at a rate such that the drips are too fast to be easily counted. When the two plys of film become parted the water addition is stopped and the weight of water in the reservoir is determined in grams. For "ordinary block", the two plys of film are merely brought together (excluding air bubbles) in such a manner that not more than negligible compression is used. For "induced block" a compression force of 1,87 kg (4.12 pounds) is applied for 24 hours at ambient room conditions (23°C, 50% R.H.) by putting a 12,7 cm×12,7 cm (5"×5") flat steel plate 1,87 kg (4.12 lbs.)) on top of the 2-ply specimen, using Mylar® plastic sheets on each side of the 2-ply specimen to avoid any unwanted blocking or clinging to the table top or to the steel plate; this compression force is about 11,6 g/$cm^2$ (or about 0,1648 lbs./$in.^2$). After this the 2-ply sample is positioned between the blocks of the test apparatus and fastened to the blocks and tested as described above. "Induced hot block" is tested the same way as above except that the pressure of the steel plate is maintained for 24 hours at a temperature of, 60°C in a temperature-controlled oven. Each test of block is repeated a plurality of times and the results averaged; in this specification the block values reported are the average of 4 specimens unless otherwise noted.

Induced "hot block" is an accelerated test made to simulate extended warehouse (or other) storage conditions where ambient temperatures can reach as high as about 60°C (140°F) on hot days.

For purposes of description in this disclosure, the following "block" ranges are arbitrarily assigned for the relative results obtained by experience using the above-described block tests:

| Approximate block range | Relative effect |
|---|---|
| up to about 50 | this is a good, acceptable range which generally gives no handling or "peel-off" problems with rolls or stacks of films. |
| about 50—150 | this is a "high block" range where one may encounter some handling problems and slower "peel-off" rates with rolls or stacks of films. |
| about 150—550 | this is an "excessive block" range wherein handling problems are very pronounced and where "peel-off" of rolls or stacks is seriously hampered; in some cases one may encounter "destructive" block, such as with very thin films which easily tear or stretch. |
| above about 550 | "destructive" blocking is most likely encountered, making handling or peel-off of stacks or rolls practically hopeless. |

When a reduction in block is made there is an accompanying improvement in handling.

Measurements for slip angle and coefficient of friction are made as follows:

Slip angle is measured on an inclinable flat, smooth plane equipped with a driving means which lifts one end of the plane through an increasing angle of 2.5° per second. A 1000-gm stainless steel block of 10,2 cm×6,35 cm×1,9 cm (4"×2.5"×0.75") thick is used as the sample holder. Film samples are conditioned in the testing lab at about 23°C and 50% R.H. for 8 hours before testing. A 10,2 cm×15,24 cm (4"×6") sample film specimen is affixed to the lower side of the steel block by using adhesive tape on the film edges on top of the steel block; it is mounted so that the machine-direction of the film is aligned along the 10,2 cm (4") direction of the steel block and along the path of slip. For film-to-film testing, another film specimen is affixed to the inclinable surface and the film on the stell block is placed on that. For film-to-metal testing, a smooth metal plate is used on the plane. A limit switch is affixed to the inclinable plane approximately 10,2 cm (0.25") from the steel block. As the plane is elevated at one end and the steel block slips down the plane, it actuates the limit switch which stops the driving force and the angle (from horizontal) is measured. Ordinarily three tests are made and the average is recorded as the slip angle.

Coefficient of friction is measured on a flat, highly-polished horizontal metal plane using a specimen "sled", a strain cell with 0—300 gram range connected to a 10 millivolt recorder, and a driving force which moves the plane at the rate of 1 inch (2.54 cm) per 11 seconds. The sled is a 200-gram, 6,35 cm×6,35 cm×0.64 cm (2.5"×2.5"×0.25") thick flat slab of stainless steel with the bottom surface covered with a sheet of sponge rubber. The film specimen, 10,2 cm×10,2 cm (4"×4"), is conditioned at 23°C and 50% R.H. for 8 hours before testing and affixed against the sponge rubber surface of the sled and is attached to the strain cell. Film-to-film measurements are made by affixing another specimen of the film onto the horizontal plane; film-to-metal measurements are made by placing the sled (with the sample affixed thereto) directly on the metal plane. The driving force moves the plane horizontally and the sled is held stationary by the strain cell. The pulling force against the strain cell, caused by friction between sled and plane, is recorded. The initial maximum peak reading is taken as the "static" force at which relative movement between the film surfaces begins. "Kinetic" force, the amount of force required to maintain the relative movement after it has started, is taken as the average of 7 2,5 cm (one-inch) spaced readings from the recorder. The static and kinetic coefficients of friction (C.O.F.) are computed by the following equations:

$$\text{static C.O.F.} = \frac{\text{static force}}{200}$$

$$\text{kinetic C.O.F.} = \frac{\text{sustained motion force}}{200}$$

The "heat seal range" is determined by heat-sealing two plies of the film (usually having a film thickness in the range of 38,1 µm to 127 µm (1.5 to 5.0 mils)) by pressing (clamping) the films together using a heated bar with a Teflon polymer surface beneath the films. Sealing is tested over a range of temperatures at −12°C (10°F) intervals, each test being made on a different portion of the films. Pressing (clamping) time for the heated bar against the films is: seconds=two-thirds of film thickness. Thus, e.g., a film 38,1 µm (1.5 mils) thick is heat-clamped for 1 second, and a film 76,2 µm (3.0 mils) thick is heat-clamped for 2 seconds. A "bad seal" is one which can be separated without tearing the film. A "good seal" is one which cannot be separated completely without tearing the film. "Burn-throughs" can occur when the temperature is too high. The temperature range over which "good" seals are obtained is taken as the heat seal range.

The following examples are given as illustrations of the invention and are not to be construed as limiting its scope. Throughout this specification and claims, all parts and percentages are by weight unless otherwise indicated.

Example 1

A slot die-cast film was prepared by compounding the following materials at 177°C (~350°F) on a 6,35 cm (2.5"), 20/l, L/D compounding extruder equipped with a metering, compression and mixing section.

22,53 kg (49.675 lbs.) of LLDPE (~8% 1-octene, 2.3 M.I., 0.917 g/cc)
0,068 kg (0.150 lbs.) of oleyl palmitamide
0,079 kg (0.175 lbs.) of finely-divided diatomaceous silica.

The polymer was obtained as pellets from the compounder and the pellets were fabricated into 1.0 mil (25.4 µm) film on a 8,89 cm (3.5") Machinery Extruders Manufacturers MPM 16/l, L/D extruder equipped with a 71,1 cm (28") longitudinal slot die at 265°C (510°F) plastic temperature using a 15,2 cm (6") air gap. The film was cooled by a series of three chill rolls at 15°C (60°F) and hauled off at 125 ft./min (38,1 m/min). The resultant block value of the slot die-cast film was 1.0 gram; the induced (hot) block value was 66.9 grams; the film-to-film static/kinetic dynamic slip value was 0.27/0.22 C.O.F.; the film-to-metal, static/kinetic dynamic slip value was 0.26/0.24 C.O.F.; and the film-to-film/film-to-metal slip angle was 14.7/20.2 degrees.

In contrast thereto the polymer without the additives, but otherwise handled and extruded as above, had a block value of 83.6 grams; an induced (hot) block value of 139 grams; a film-to-film, static/kinetic dynamic slip value of >1.40/>1.40 C.O.F.; a film-to-metal static/kinetic dynamic slip value of >1.40/>1.40 C.O.F.; and a film-to-film/film-to-metal slip angle of >62/>62 degrees.

Example 2

In similar manner to Example 1 above, using the same polymer, amide and silica, the following data are obtained:

| Run | amide ppm | silica ppm | film-to-film, COF static | film-to-film, COF kinetic | induced hot block, g |
|---|---|---|---|---|---|
| 1 | 2000 | 3500 | 0.21 | 0.17 | 116.8 |
| 2 | 2000 | none | >1.40 | >1.40 | 120.6 |
| 3 | none | none | >1.40 | >1.40 | 139.0 |

Example 3

In similar manner to Example 1 above, using the same polymer, but using no amide and using three different finely-divided natural inorganics, the following data are obtained:

| Run | ppm inorganic silica | ppm inorganic talc | ppm inorganic limestone | film-to-film, COF static | film-to-film, COF kinetic | induced hot block, g |
|---|---|---|---|---|---|---|
| 1 | 6000 | none | none | 0.77 | 0.75 | 69.2 |
| 2 | none | 6000 | none | 1.07 | 1.14 | 151.3 |
| 3 | none | none | 6000 | >1.40 | >1.40 | 141.5 |

Example 4

In similar manner to Example 1 above, using the same polymer and using the same diatomaceous silica, but using stearyl erucamide as the amide, the following data are obtained:

| Run | amide ppm | silica ppm | film-to-film, COF static | film-to-film, COF kinetic | induced hot block, g |
|---|---|---|---|---|---|
| 1 | 3000 | 3500 | 0.26 | 0.22 | 20.2 |
| 2 | 2000 | 3500 | 0.27 | 0.22 | 66.9 |
| 3 | 2000 | none | >1.40 | >1.40 | 99.3 |
| 4 | 6000 | none | >1.40 | >1.40 | 70.6 |

Example 5

In similar manner to Example 1 above, using the same polymer and silica, but using stearyl stearamide as the amide, the following data are obtained:

| Run | amide ppm | silica ppm | film-to-film, COF static | film-to-film, COF kinetic | induced hot block, g |
|---|---|---|---|---|---|
| 1 | 3000 | 3500 | 0.89 | 0.80 | 64.4 |
| 2 | 2000 | none | >1.40 | >1.40 | 129.9 |
| 3 | 6000 | none | >1.40 | >1.40 | 46.1 |

Example 6

In similar manner to Example 1 above, but using stearyl erucamide as the amide, and using the same silica, the polymer of Example 1 is compared with a LLDPE of 4% 1-octene, 2.5 M.I., and 0.935 g/cm$^3$ density. The data are shown below wherein Polymer A is the same as in Example 1 above and Polymer B is as identified immediately above.

| Run | Polymer | amide ppm | silica ppm | film-to-film, COF static | film-to-film, COF kinetic | induced hot block, g. |
|---|---|---|---|---|---|---|
| 1 | B | none | none | 0.67 | 0.55 | 60.2 |
| 2 | B | 3000 | 3500 | 0.14 | 0.14 | 3.5 |
| 3 | A | 3000 | 3500 | 0.26 | 0.22 | 20.2 |

The above data illustrates that even though Polymer B having a density of 0.935 was improved by addition of the amide and silica, it already had fairly good block and slip characteristics and was not in great need of improvement.

Example 7

In similar manner to the above examples, a LLDPE of 8% 1-octene, 2.3 M.I. and 0.917 g./cm$^3$ density was tested with stearyl erucamide, finely-divided diatomaceous silica (A), and finely-divided natural talc (B). The data are as follows:

| Run | amide ppm | inorganic, ppm silica | inorganic, ppm talc | film-to-film, COF static | film-to-film, COF kinetic | induced hot block, g. |
|---|---|---|---|---|---|---|
| 1 | none | none | none | >1.4 | >1.4 | 142.8 |
| 2 | 3000 | 3000 | none | 0.21 | 0.19 | 10.2 |
| 3 | 3000 | none | 3000 | 0.19 | 0.22 | 13.0 |

Example 8

In similar manner to the above examples, using LLDPE of 8% 1-octene, 2.3 M.I., and 0.917 g/cm$^3$ density, stearyl erucamide, and diatomaceous silica, the following data are obtained:

| Run | amide ppm | silica ppm | heat seal range, °C (°F) | heat seal strength, kg (lb) |
|---|---|---|---|---|
| 1 | none | none | 115.6—126.7 (240—260) | 1.13 (2.5) |
| 2 | none | 3500 | 115.6—126.7 (240—260) | 1.27 (2.8) |
| 3 | 3000 | 3500 | 115.6—126.7 (240—260) | 1.18 (2.6) |

Thus the amide and silica additives have no adverse effect on the heat-sealing of the polymer.

Example 9

In similar manner to the above examples, a LLDPE of 8% 1-octene, 2.3 M.I., and 0.917 g/cm$^3$ density (A) was tested with finely divided diatomaceous silica, stearyl erucamide (B) and erucyl erucamide (D). The data are as follows:

| Run | polymer | amide ppm | silica ppm | film-to-film, COF static | film-to-film, COF kinetic | ordinary block, g |
|---|---|---|---|---|---|---|
| 1 | A | None | None | >1.40 | >1.40 | 60.0 |
| 2 | A | 2500,D | 3000 | 0.16 | 0.13 | 0.4 |
| 3 | A | 2500,B | 3000 | 0.22 | 0.19 | 2.7 |

Example 10

In similar manner to the above examples, using LLDPE of 10% 1-butene, 2.1 MI and 0.918 g/cm$^3$ density (C), LLDPE of 8% 1-octene, 2.3 MI and 0.917 g/cm$^3$ density (A), stearyl erucamide and diatomaceous silica, the following data are obtained.

| Run | polymer | amide ppm | silica ppm | film-to-film, COF static | film-to-film, COF kinetic | induced hot block, g. |
|---|---|---|---|---|---|---|
| 1 | A | none | none | >1.40 | >1.40 | 142.8 |
| 2 | C | none | none | >1.40 | >1.40 | 126.5 |
| 3 | C | 2500 | 3000 | 0.27 | 0.21 | 2.2 |

**Claims**

1. A process for reducing block and increasing slip of extrusion cast films of low density ethylene copolymers which inherently exhibit high block and low slip, the process comprising incorporating into said copolymer prior to extrusion casting into films at least one secondary fatty acid amide and a finely divided mineral, and extrusion-casting the mixture into a film, characterized in that the copolymer is a linear low density ethylene copolymer comprising ethylene copolymerized with 5% to 20% by weight of at least one alpha,beta-ethylenically unsaturated alkene having from 3 to 12 carbon atoms, to provide a copolymer having a density in the range of 0.9 to 0.94 g/cm$^3$ and a melt index in the range of 0.1 g/10 min as measured by ASTMD-1238(E) to 20 g/10 min as measured by ASTMD-1238(D), and said secondary fatty acid amide conforms to the empirical formula R—CO—NH—R′, wherein R and R′ each independently are saturated or unsaturated alkyl groups having 10 to 26 carbon atoms, this secondary fatty acid amide being incorporated in an amount in the range of 0.05 to 1.5 weight percent, and said finely divided mineral is a natural mineral which is incorporated in the copolymer in an amount in the range of 0.02 to 2 weight percent.

2. The process of claim 1, wherein the secondary fatty acid amide is incorporated in an amount in the range of 0.1 to 0.5 weight percent and/or the finely divided natural mineral is incorporated in an amount in the range of from 0.15 to 0.6 weight percent.

3. The process of claims 1 or 2, wherein the alkene is at least one selected from propylene, butene, isobutene, pentene, isopentene, hexene, isohexene, heptene, isoheptene, octene, isooctene, nonene, isononene, decene, and isodecene.

4. The process of claims 1 to 3, wherein the secondary fatty acid amide is at least one of stearyl erucylamide, erucyl erucylamide, oleyl palmitamide, stearyl stearamide and oleyl erucylamide.

5. The process of claims 1 to 4, wherein the finely-divided natural mineral comprises clay, diatomaceous silica, talc and/or limestone.

6. The process of claims 1 to 5, wherein the finely divided natural inorganic mineral comprises silica and/or diatomaceous earth having a surface area of 0.7 to 100 $m^2/g$, an oil absorption value of 9.5 kg to 79.4 kg oil per 45.4 kg inorganic mineral, and an average particle size of 0.02 to 40 microns (µm).

7. The process of claims 1 to 6, wherein the incorporating of the amide and the mineral into the said copolymer comprises the use of a master-batch of an ethylene polymer with amide and mineral mixed therein and the blending of said masterbatch with said copolymer to attain the desired amount of amide and mineral in the film produced therefrom.

8. The film produced by the process of claims 1 to 7 having an average thickness in the range of 7.62 µm to 203.2 µm (0.3 to 8 mils).

9. A composition comprising a blend of low density ethylene copolymer, secondary fatty acid amide and finely divided mineral, characterized in that the copolymer is a linear low density ethylene copolymer comprising ethylene copolymerized with 5% to 20% by weight of at least one alpha,beta-ethylenically unsaturated alkene having from 3 to 12 carbon atoms, to provide a copolymer having a density in the range of 0.9 to 0.94 $g/cm^3$ and a melt index in the range of 0.1 g/10 min as measured by ASTM D-1238(E) to 20 g/10 min as measured by ASTM D-1238(D), and said secondary fatty acid amide conforms to the empirical formula R—CO—NH—R', wherein R and R' each independently are saturated or unsaturated alkyl groups having 10 to 26 carbon atoms, this secondary fatty acid amide being incorporated in an amount in the range of 0.05 to 1.5 weight percent, and said finely divided mineral is a natural mineral which is incorporated in the copolymer in an amount in the range of 0.02 to 2 weight percent.

**Patentansprüche**

1. Verfahren zum Verringern des Blockens und Erhöhen des Gleitens von extrusionsgegossenen Filmen aus Ethylencopolymeren niedriger Dichte, die starkes Blocken und schlechtes Gleitverhalten aufweisen durch Einbringen mindestens eines sekundären Fettsäureamids und eines feinteiligen Minerals in das Copolymere vor dem Extrusionsgießen des Filmes und Extrusionsgießen der Mischung zu einem Film, dadurch gekennzeichnet, daß das Copolymere ein lineares Ethylencopolymer niedriger Dichte ist, das copolymerisiert ist mit 5—20% Gew.% mindestens eines alpha,beta-ethylenisch ungesättigten Alken mit 3—12 Kohlenstoffatomen, um den Copolymer eine Dichte im Bereich von 0,9 bis 0,94 $g/cm^3$ und einem Schmelzindex im Bereich von 0,1 g/10 Min., gemessen nach ASTM D-1238(E) bis 20 g/10 Min., gemessen nach ASTM D-1238(D) zu verleihen und daß das sekundäre Fettsäureamid der empirischen Formel R—CO—NH—R' genügt, in der R und R' unabhängig voneinander gesättigte oder ungesättigte Alkylgruppen mit 10—26 Kohlenstoffatomen sind, wobei das sekundäre Fettsäurearnid in einer Menge im Bereich von 0,05 bis 1,5 Gew.% eingearbeitet ist und das feinteilige Mineral ein natürliches Mineral ist, das in das Copolymere in einer Menge im Bereich von 0,02 bis 2 Gew.% eingearbeitet ist.

2. Verfahren nach Anspruch 1, dadurch gekennzeichnet, daß das sekundäre Fettsäureamid in einer Menge im Bereich von 0,1—0,5 Gew.% eingearbeitet ist und/oder das feinteilige natürliche Mineral in einer Menge im Bereich von 0,15—0,6 Gew.% eingearbeitet ist.

3. Verfähren nach Ansprüchen 1 oder 2, dadurch gekennzeichnet, daß das Alken mindestens eines ist, ausgewählt aus Propylen, Buten, Isobuten, Penten, Isopenten, Hexen, Isohexen, Hepten, Isohepten, Octen, Isoocten, Nonen, Isononen, Decen oder Isodecen.

4. Verfahren nach Ansprüchen 1 bis 3, dadurch gekennzeichnet, daß das sekundäre Fettsäureamid mindestens eines ist von Stearyl-Erucylamid, Erucyl-Erucylamid, Oleyl-Palmitylamid, Stearyl-Stearamid und Oleyl-Erucylamid.

5. Verfahren Ansprüchen 1 bis 4, dadurch gekennzeichnet, daß das feinteilige natürliche Mineral Clay, Diatomeenerde, Talk und/oder Kalkstein enthält.

6. Verfahren nach Ansprüchen 1 bis 5, dadurch gekennzeichnet, daß das feinteilige, natürliche, anorganische Mineral Siliziumdioxid und/oder Diatomeenerde enthält mit einer Oberfläche von 0,7 bis 100 $m^2/g$, einem Ölabsorptionswert von 9,5 kg bis 79,4 kg öl pro 45,4 kg anorganisches Mineral und eine mittlere Teilchengröße von 0,02 bis 40 Mikron (µm) aufweist.

7. Verfahren nach Ansprüchen 1 bis 6, dadurch gekennzeichnet, daß das Einbringen des Amids und des Minerals in das Copolymer die Verwendung einer Grundmischung eines Ethylenpolymer mit dem eingemischten Amid und Mineral und das Mischen der Grundmischung mit dem Copolymeren, um die gewünschten Mengen von Amid und Mineral in dem daraus hergestellten Film zu erhalten, einschließt.

8. Nach dem Verfahren der Ansprüche 1 bis 7 hergestellter Film mit einer mittleren Dicke im Bereich von 7,62 µm bis 203,2 µm (0,3—8 Mils).

9. Zusammensetzung enthaltend eine Mischung von Ethylencopolymer niedriger Dichte, sekundärem Fettsäureamid und feinteiligem Mineral, dadurch gekennzeichnet, daß das Copolymere ein lineares

Ethylencopolymer niedriger Dichte ist, das copolymerisiert ist mit 5 bis 20 Gew.-% mindestens einem alpha,beta-ethylenisch ungesättigten Alken mit 3—12 Kohlenstoffatomen, um den Copolymer eine Dichte im Bereich von 0,9 bis 0,94 g/cm$^3$, einen Schmelzindex im Bereich von 0,1 g/10 Min., gemessen nach ASTM D-1238(E) bis 20 g/10 Min., gemessen nach ASTM D-1238(D) zu verleihen und daß das sekundäre Fettsäureamid der empirischen Formel R—CO—NH—R' genügt, in der R und R' unabhängig voneinander gesättigte oder ungesättigte Alkylgruppen mit 10—26 Kohlenstoffatomen sind, wobei das sekundäre Fettsäureamid in einer Menge im Bereich von 0,05—1,5 Gew.% eingearbeitet ist und das feinteilige Mineral ein natürliches Mineral ist, das in das Copolymer in einer Menge im Bereich von 0,02—2 Gew.% eingearbeitet ist.

**Revendications**

1. Procédé pour réduire l'adhérence par contact et augmenter le glissement des films moulés par extrusion, en copolymère basse densité d'éthylène qui présentent d'une manière inhérente une adhérence par contact élevée et un faible glissement, le procédé comprenant l'incorporation dans ledit copolymère, avant le moulage par extrusion en films, d'au moins un amide secondaire d'acide gras et d'un produit minéral finement divisé, et le moulage par extrusion du mélange en un film, caractérisé en ce que le copolymère est un copolymère linéaire basse densité d'éthylène, avec 5% à 20% en poids d'au moins un alcène à insaturation alpha,beta-éthylénique comprenant de 3 à 12 atomes de carbone, pour produire un copolymère ayant une densité dans la gamme de 0,9 à 0,94 g/cm$^3$ et un indice de fluidité dans la gamme de 0,1 g/10 min, mesuré selon ASTM D-1238(E), à 20 g/10 min, mesuré selon ASTM D-1238(D), et ledit amide secondaire d'acide gras répond à la formule empirique R—CO—NH—R' où R et R' représentent chacun indépendamment des groupes alkyle saturés ou insaturés, comprenant 10 à 26 atomes de carbone, cet amide secondaire d'acide gras étant incorporé dans une proportion comprise entre 0,05 et 1,5% en poids, et ledit produit minéral finement divisé est un produit minéral naturel qui est incorporé dans le copolymère dans une proportion de 0,02 à 2% en poids.

2. Procédé selon la revendication 1, dans lequel l'amide secondaire d'acide gras est incorporé dans une proportion comprise entre 0,1 et 0,5% en poids, et/ou le produit minéral finement divisé est incorporé dans une proportion comprise entre 0,15 et 0,6% en poids.

3. Procédé selon la revendication 1 ou 2, dans lequel l'alcène est au moins un composé choisi entre le propylène, le butène, l'isobutène, le pentène, l'isopentène, l'hexène, l'isohexène, le heptène, l'isoheptène, l'octène, l'isooctène, le nonène, l'isononène, le décène, et l'isodécène.

4. Procédé selon les revendications 1 à 3, dans lequel l'amide secondaire d'acide gras est au moins un composé choisi entre le stéaryl-érucamide, l'érucyl-érucamide, l'oléyl-palmitamide, le stéaryl-stéaramide, et l'oléyl-érucamide.

5. Procédé selon les revendications 1 à 4, dans lequel le produit minéral finement divisé comprend de l'argile, de la silice de diatomées, du talc et/ou du carbonate de chaux.

6. Procédé selon les revendications 1 à 5, dans lequel le produit minéral inorganique naturel finement divisé comprend de la silice et/ou de la terre de diatomées ayant une aire spécifique de 0,7 à 100 m$^2$/g, un indice d'absorption d'huile de 9,5 kg à 79,4 kg d'huile pour 45,4 kg de produit inorganique mineral, et une dimension moyenne des particules de 0,02 à 40 microns (μm).

7. Procédé selon les revendications 1 à 6, dans lequel l'incorporation de l'amide et du minéral dans ledit copolymère comprend l'utilisation d'un mélange-maître d'un polymère d'éthylène avec l'amide et le produit minéral mélangés dedans, et le mélange dudit mélange-maître avec ledit copolymère de façon à obtenir la proportion souhaitée d'amide et de produit minéral dans le film produit à partir du copolymère.

8. Film produit par le procédé des revendications 1 à 7, ayant une épaisseur moyenne dans la gamme de 7,62 μm à 203,2 μm (0,3 à 8 mils).

9. Composition comprenant un mélange de copolymère linéaire basse densité d'éthylène, d'amide secondaire d'acide gras et de produit minéral finement divisé, caractérisé en ce que le copolymère est un copolymère linéaire basse densité d'éthylène comprenant de l'éthylène copolymérisé avec 5% à 20% en poids d'au moins un alcène à insaturation alpha,béta-éthylénique, comprenant 3 à 12 atomes de carbone, pour donner un copolymère ayant une densité dans la gamme de 0,9 à 0,94 g/cm$^3$ et un indice de fluidité dans la gamme de 0,1 g/10 min, mesuré selon ASTM D-1238(E), à 20 g/10 min mesuré selon ASTM D-1238(D) et ledit amide secondaire d'acide gras répond à la formule empirique R—CO—NH—R', où R et R' représentent chacun indépendamment des groupes alkyle saturés ou instурés, comprenant 10 à 26 atomes de carbone, cet amide secondaire d'acide gras étant incorporé dans une proportion comprise entre 0,05 et 1,5% en poids, et ledit produit minéral finement divisé est un produit minéral naturel qui est incorporé dans le copolymère dans une proportion de 0,02 à 2% en poids.